# EUROPEAN PATENT APPLICATION

(11) **EP 4 491 848 A1**
(43) Date of publication of application: **15.01.2025**
(21) Application number: 24181517.4
(22) Date of filing: 11.06.2024
(51) Int. Cl.: F01D 5/00, F01D 5/30, F01D 9/04, F01D 25/28, B25B 27/02

(54) **SEPARATION TOOL AND METHOD FOR NOZZLE SEGMENTS OF GAS TURBINES**

(30) Priority: 05.07.2023 PL 44548523
(71) Applicant: General Electric Technology GmbH, 5400 Baden (CH)
(72) Inventor: SKALSKI, Rafal, 02-256 Warsaw (PL); SAJDAK, Lukasz, 02-256 Warsaw (PL); KORUS, Mateusz, 02-256 Warsaw (PL); WOJCIECHOWSKI, Piotr, 02-256 Warsaw (PL)
(74) Representative: Freigutpartners IP Law Firm

(57) **Abstract**

The present application provides a nozzle segment separation tool (100) for use with a pair of adjacent nozzle segments (66) in a casing (64) of a turbine (40). The nozzle segment separation tool (100) may include a pair of support plates (110), a hydraulic cylinder (120) positioned within the pair of support plates (110), a pushing bar (130) attached to the hydraulic cylinder (120), a nozzle catch plate (140) positioned within the pair of support plates (110), and a blocking pin (330) inserted through the casing (64). The blocking pin (330) forces the nozzle catch plate (140) to engage a first nozzle segment (66) of the pair of adjacent nozzle segments (66) and blocks movement of the pushing bar (130) such that the nozzle catch plate (140) separates the pair of adjacent nozzle segments (66).

## Description

### TECHNICAL FIELD

The present application and the resultant patent relate generally to gas turbine engines and more particularly relate to a separation tool to separate adjacent nozzle segments in preparation for removing the nozzles from the casing of the turbine for repair or replacement.

### BACKGROUND

A gas turbine engine conventionally includes a compressor for compressing ambient air and a combustor for mixing the flow of air with a flow of fuel to generate hot combustion gases. A turbine receives the flow of hot combustion gases and extracts energy therefrom for powering the compressor and for producing output power for an external load such as an electrical generator and the like. The turbine components such as the turbine nozzles and blades positioned along the hot gas path are subject to not only high combustion temperatures and pressures but also different types of dynamic forces. Given such, these hot gas path components may be replaced and/or refurbished on a periodic basis to ensure efficient and safe performance.

Removal of a hot gas component such as a nozzle and the like may be difficult and time consuming. Each stage of the nozzles typically may be formed in segments and placed circumferentially end-to-end to form a continuous ring about a casing of the turbine section. The high temperature and high pressure environment may cause the nozzles to stick together and/or to be seized in the supporting structure. The small clearances in the turbine section, however, provide very little space to access the nozzles and the other components much less space to apply any type of force to separate the nozzles prior to removal.

### SUMMARY

The present application and the resultant patent thus provide a nozzle segment separation tool for use with a pair of adjacent nozzle segments in a casing of a turbine. The nozzle segment separation tool may include a pair of support plates, a hydraulic cylinder positioned within the pair of support plates, a pushing bar attached to the hydraulic cylinder, a nozzle catch plate positioned within the pair of support plates, and a blocking pin inserted through the casing. The blocking pin forces the nozzle catch plate to engage a first nozzle segment of the pair of adjacent nozzle segments and blocks movement of the pushing bar such that the nozzle catch plate separates the pair of adjacent nozzle segments.

The present application and the resultant patent further provide a method of separating a pair of adjacent nozzles in a casing of a turbine. The method may include the steps of sliding a nozzle segment separation tool about the pair of adjacent nozzles, inserting a blocking pin through the casing, forcing a nozzle catch plate of the nozzle segment separation tool into contact with one of the pair of adjacent nozzles by the blocking pin, engaging the blocking pin with a pushing bar of the nozzle segment separation tool, and pulling the one of the pair of adjacent nozzles by the nozzle catch plate.

The present application and the resultant patent further may provide a nozzle segment separation tool for use with a pair of adjacent nozzle segments in a casing of a turbine. The nozzle segment separation tool may include a pair of support plates, a hydraulic cylinder positioned within the pair of support plates, a pushing bar attached to the hydraulic cylinder, a spring-loaded nozzle catch plate positioned within the pair of support plates, and a blocking pin inserted through the casing. The blocking pin forces the spring-loaded nozzle catch plate to engage a first nozzle segment of the pair of adjacent nozzle segments and blocks movement of the pushing bar such that the spring-loaded nozzle catch plate separates the pair of adjacent nozzle segments via force applied by the hydraulic cylinder.

These and other features and improvements of this application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine including a compressor, a combustor, a turbine, and an external load.
Fig. 2 is a schematic diagram of a number of stages positioned within a casing of a turbine.
Fig. 3 is a perspective view of a nozzle segment separation tool as may be described herein.
Fig. 4 is a partial sectional view of the nozzle segment separation tool of Fig. 3.
Fig. 5 is a top plan view of a nozzle catch plate of the nozzle segment separation tool of Fig. 3.
Fig. 6 is a partial sectional view of the nozzle catch plate of Fig. 5 of the nozzle segment separation tool.
Fig. 7 is a front plan view of a shroud plate of the nozzle segment separation tool of Fig. 3.
Fig. 8 is a side plan view of a blocking pin for use with the nozzle segment separation tool of Fig. 3.
Fig. 9 is a perspective view of the nozzle segment separation tool being positioned about a segment of nozzles.
Fig. 10 is a partial plan view of the nozzle catch plate of the nozzle segment separation tool in use.
Fig. 11 is a further partial plan view of the nozzle catch plate of the nozzle segment separation tool and the blocking pin in use.
Fig. 12 is a perspective view of the nozzle segment separation tool in position about a segment of nozzles.

### DETAILED DESCRIPTION

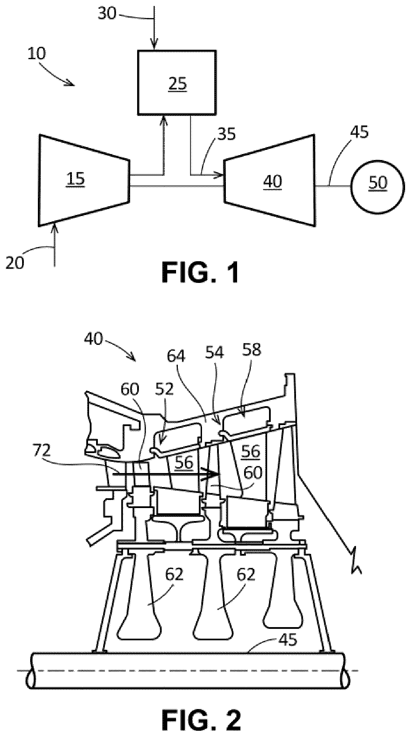

Referring now to the drawings, in which like numerals refer to like elements throughout the several views, Fig. 1 shows a schematic diagram of a gas turbine engine 10 as may be used herein. The gas turbine engine 10 may include a compressor 15. The compressor 15 compresses an incoming flow of air 20. The compressor 15 delivers the compressed flow of air 20 to a number of combustor cans 25. The combustor cans 25 mix the compressed flow of air 20 with a pressurized flow of fuel 30 and ignite the mixture to create a flow of hot combustion gases 35. Although only a single combustor can 25 is shown, the gas turbine engine 10 may include any number of combustor cans 25 positioned in a circumferential array and the like. Alternatively, the combustor 25 may be an annular combustor. The flow of combustion gases 35 is in turn delivered to a turbine 40. The flow of combustion gases 35 drives the turbine 40 to produce mechanical work. The mechanical work produced in the turbine 40 drives the compressor 15 and an external load 50 such as an electrical generator and the like via a rotor shaft 45.

The gas turbine engine 10 may use natural gas, various types of syngas, liquid fuels, and/or other types of fuels and blends thereof. The gas turbine engine 10 may be any one of a number of different gas turbine engines offered by General Electric Company of Schenectady, New York, including, but not limited to, those such as a 7-series or a 9-series heavy duty gas turbine engine and the like. The gas turbine engine 10 may be part of a simple cycle or a combined cycle power generation system or other types of generation systems. The gas turbine engine 10 may have different configurations and may use other types of components. Other types of gas turbine engines also may be used herein. Multiple gas turbine engines, other types of turbines, and other types of power generation equipment also may be used herein together.

Fig. 2 is a partial sectional view of the turbine 40. The turbine 40 includes a number of stages 52. Generally described, each stage 52 includes a stationary row 54 of nozzles 56 and a rotating row 58 of turbine blades 60. In this example, three stages 52 are shown, a first stage, a second stage, and a third stage. The turbine blades 60 in each row 58 are spaced circumferentially about, and extend radially outward from, a rotor disk 62. Each rotor disk 62 is coupled to the rotor shaft 45. A turbine casing 64 extends circumferentially about the nozzles 56. The nozzles 56 are each coupled to the turbine casing 64 and each nozzle 56 extends radially inward from the turbine casing 64 towards the rotor shaft 45. Specifically, as will be described in more detail below, the nozzles 56 may be arranged in a number of segments 66 and may be attached to the turbine casing 64 via a number of shroud grooves 68 in a number of shrouds 70. A hot combustion gas path 72 may be defined between the turbine casing 64 and each rotor disk 62.

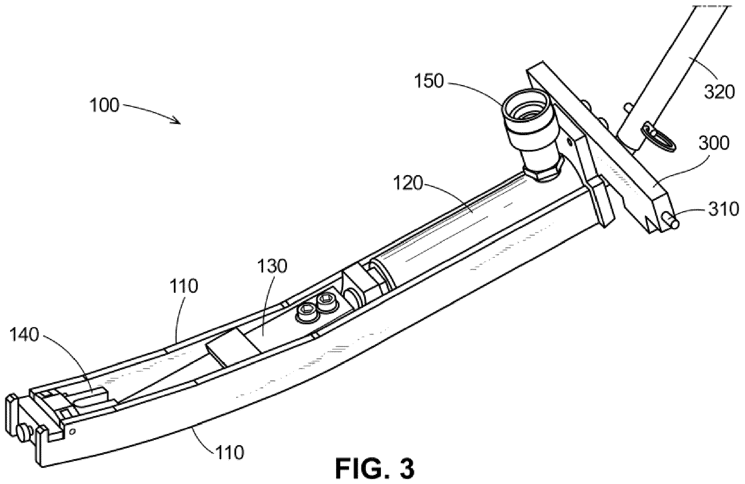

Fig. 3 shows an example of a nozzle segment separation tool 100 as may be described herein. The nozzle segment separation tool 100 may include a pair of support plates 110. The support plates 110 may be made out of any substantially rigid material such as stainless steel and the like. Positioned within the support plates 110 may be a hydraulic cylinder 120, a pushing bar 130, a nozzle catch plate 140, and connecting elements as will be described in more detail below.

The hydraulic cylinder 120 may be of conventional design. Specifically, the hydraulic cylinder 120 may include a hydraulic fluid port 150 and an internal piston 160. The hydraulic cylinder 120 may provide a single stroke or a double stroke. An exemplary hydraulic cylinder may be a five-ton capacity hydraulic cylinder sold by ENERPAC of Milwaukie, Wisconsin. Other type of hydraulic cylinders, other types of capacities, and other types of push or pull mechanisms may be used herein.

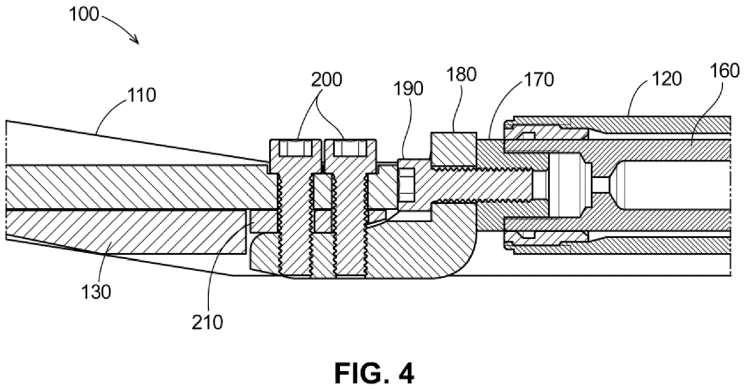

The pushing bar 130 may extend within the support plates 110 from the hydraulic cylinder 120 to beneath the nozzle catch plate 140. The pushing bar 130 may have an elongated shape and may be positioned at an angle within the support plates 110. The pushing bar 130 may be made out of any type of substantially rigid material such as stainless steel and the like. As is shown in Fig. 4, the pushing bar 130 may be joined to the hydraulic cylinder 120 via a threaded adapter 170 attached to the piston 160 and an L-shaped bar 180 bolted to the pushing bar 130. Specifically, the threaded adapter 170 and the L-shaped bar 180 may be joined via a first bolt 190. The pushing bar 130 and the L-shaped bar 180 also may be joined by a pair of second bolts 200. The pushing bar 130 and the L-shaped bar 180 also may be formed as a single element. Other types of connection means may be used. A spacer 210 and the like also may be used between the pushing bar 130 and the L-shaped bar 180. Other components and other configurations may be used herein.

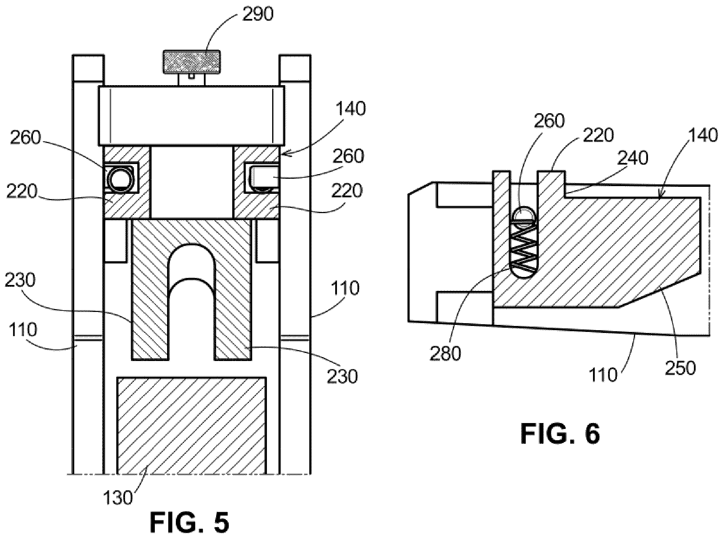

The nozzle catch plate 140 may be positioned at the other end of the support plates 110. As is shown in Figs. 5 and 6, the nozzle catch plate 140 may have a pair of support arms 220 and a pair of catch arms 230. The support arms 220 and the catch arms 230 together form an L-shaped catch surface 240. The bottom of the catch arms 230 may have an angled surface 250 angling upwards toward the pushing bar 130. The nozzle catch plate 140 may be joined to the support plates 110 via a pair of pins 260 positioned within slots 270 in the support arms 220. Each slot 270 may have a spring 280 positioned therein in contact with the pin 260. The springs 280 serve to push the nozzle catch plate 140 downward within the support plates 110. A spring plunger 290 also may be used to limit the relative movement of the nozzle catch plate 140. Removing the spring plunger 290 also allows the replacement of the nozzle catch plate 140 for use with different stages with different configurations. Other components and other configurations also may be used herein.

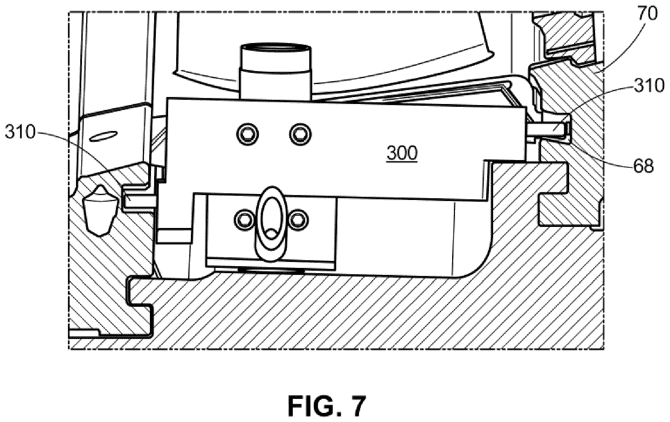

Positioned on the other end of the support plates 110 adjacent to the hydraulic cylinder 120 may be a shroud plate 300. As is shown in Fig. 7, the shroud plate 300 may have a pair of shroud pins 310 on either side thereof. The shroud pins 310 are sized and positioned to be inserted within the shroud grooves 68 within the turbine shrouds 70. The shroud plate 300 and the shroud pins 310 serve to stabilize the nozzle segment separation tool 100 when adjacent to the segments 66 of the nozzles 56. Referring again to Fig. 3, a positioning pipe 320 may be welded to the support plates 110. The positioning pipe 320 may be used to position and move the nozzle segment separation tool 100 with respect to the segments 66 of the nozzles 56. Other components and other configurations may be used herein.

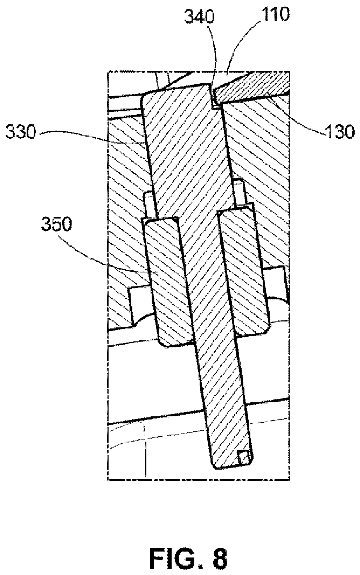

The nozzle segment separation tool 100 may be used with a blocking pin 330. As is shown in Fig. 8, the blocking pin 330 may have a flat surface 340 sized to accommodate the pushing bar 130. The blocking pin 330 may be positioned with the turbine casing 64 via a blocking nut 350. Blocking pins 330 of differing sizes and shapes may be used with different stages. Other components and other configurations may be used herein.

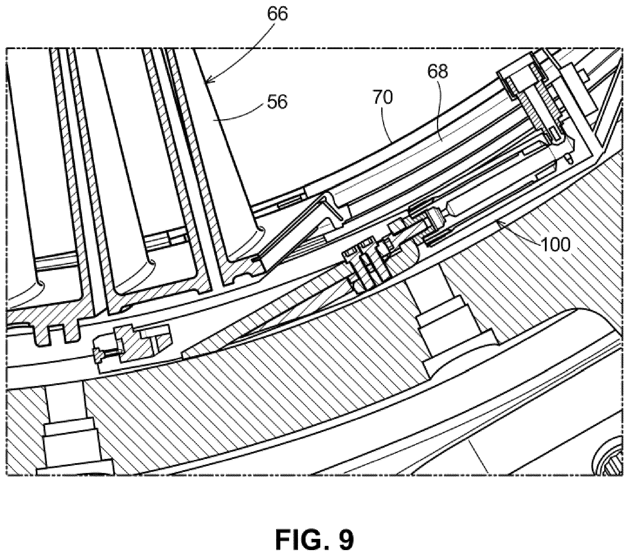

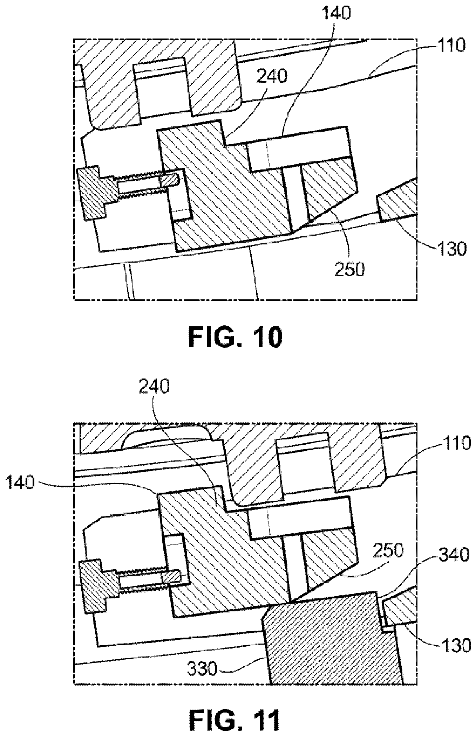

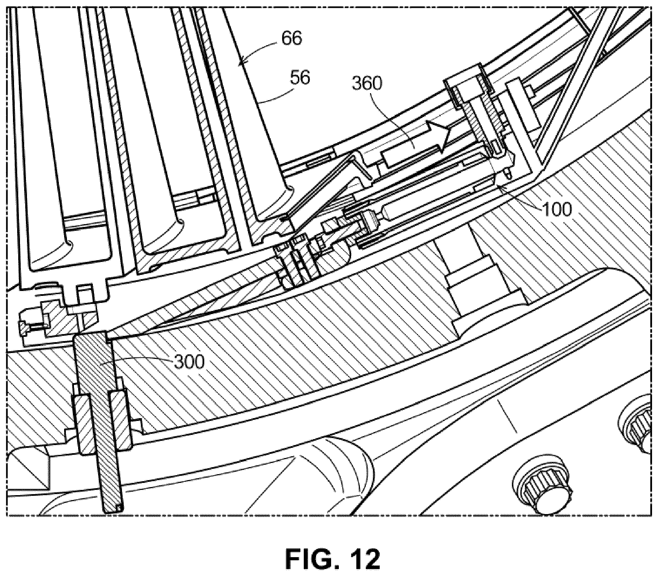

In use as is shown in Figs. 9-12, the nozzle segment separation tool 100 may be inserted within the shroud grooves 68 of the turbine shroud 70 via the shroud plate 300 and shroud pins 310. Likewise, the blocking pin 330 may be inserted within the turbine casing 64 and locked into place with the locking nut 350. As the nozzle segment separation tool 100 is positioned underneath or about the nozzles 56, the angled surface 250 of the nozzle catch plate 140 rides along the blocking pin 330 until the catch surface 240 moves beyond the nozzle 56. The nozzle segment separation tool 100 continues to advance until the pushing bar 130 contacts the flat surface 340 of the blocking pin 330.

The nozzle segment separation tool 100 thus may be positioned with the catch surface 240 of the nozzle catch plate 140 in contact with the nozzle 56 and the pushing bar 130 in contact with the flat surface 340 of the blocking pin 330. Once the pushing bar 130 is blocked, the hydraulic cylinder 120 may be activated to pull the support plates 110 and the nozzle catch plate 140 in the direction of arrow 360. This pulling action forces the nozzles 56 and/or the nozzle segments 66 to separate. Once separated, the nozzles 56 may be removed in the ordinary fashion.

It should be apparent that the foregoing relates only to certain embodiments of this application and resultant patent. Numerous changes and modifications may be made herein by one of ordinary skill in the art without departing from the general spirit and scope of the invention as defined by the following claims and the equivalents thereof.

Further aspects of the invention are provided by the subject matter of the following clauses:
1. A nozzle segment separation tool for use with a pair of adjacent nozzle segments in a casing of a turbine, comprising: a pair of support plates; a hydraulic cylinder positioned within the pair of support plates; a pushing bar attached to the hydraulic cylinder; a nozzle catch plate positioned within the pair of support plates; and a blocking pin inserted through the casing; wherein the blocking pin forces the nozzle catch plate to engage a first nozzle segment of the pair of adjacent nozzle segments and blocks movement of the pushing bar such that the nozzle catch plates separates the pair of adjacent nozzle segments.
2. The nozzle segment separation tool of any preceding clause, wherein the pair of support plates comprises stainless steel.
3. The nozzle segment separation tool of any preceding clause, wherein the pushing bar comprises stainless steel.
4. The nozzle segment separation tool of any preceding clause, wherein the hydraulic cylinder and the pushing bar are connected via a threaded adapter.
5. The nozzle segment separation tool of any preceding clause, wherein the hydraulic cylinder and the pushing bar are connected via an L-shaped bar.
6. The nozzle segment separation tool of any preceding clause, wherein the nozzle catch plate comprises a pair of catch arms and a pair of support arms.
7. The nozzle segment separation tool of any preceding clause, wherein the pair of catch arms and the pair of support arms comprise a catch surface for the first nozzle segment.
8. The nozzle segment separation tool of any preceding clause, wherein the pair of catch arms comprises an angled surface for the pushing bar.
9. The nozzle segment separation tool of any preceding clause, wherein each of the pair of support arms comprises a slot with a spring-loaded pin therein.
10. The nozzle segment separation tool of any preceding clause, wherein the nozzle catch plate comprises a spring plunger therein.
11. The nozzle segment separation tool of any preceding clause, further comprising a shroud plate positioned adjacent to the pair of support plates.
12. The nozzle segment separation tool of any preceding clause, wherein the shroud plate comprises a plurality of shroud pins.
13. The nozzle segment separation tool of any preceding clause, wherein the blocking pin comprise a flat face for the pushing bar.
14. The nozzle segment separation tool of any preceding clause, wherein the blocking pin comprises a blocking nut.
15. A method of separating a pair of adjacent nozzles in a casing of a turbine, comprising: sliding a nozzle segment separation tool about the pair of adjacent nozzles; inserting a blocking pin through the casing; forcing a nozzle catch plate of the nozzle segment separation tool into contact with one of the pair of adjacent nozzles by the blocking pin; engaging the blocking pin with a pushing bar of the nozzle segment separation tool; and pulling the one of the pair of adjacent nozzles by the nozzle catch plate.
16. A nozzle segment separation tool for use with a pair of adjacent nozzle segments in a casing of a turbine, comprising: a pair of support plates; a hydraulic cylinder positioned within the pair of support plates; a pushing bar attached to the hydraulic cylinder; a spring-loaded nozzle catch plate positioned within the pair of support plates; and a blocking pin inserted through the casing; wherein the blocking pin forces the spring-loaded nozzle catch plate to engage a first nozzle segment of the pair of adjacent nozzle segments and blocks movement of the pushing bar such that the spring-loaded nozzle catch plate separates the pair of adjacent nozzle segments via the hydraulic cylinder.
17. The nozzle segment separation tool of any preceding clause, wherein the pair of support plates and the pushing bar comprise stainless steel.
18. The nozzle segment separation tool of claim 16, wherein the spring-loaded nozzle catch plate comprises a pair of catch arms and a pair of support arms.
19. The nozzle segment separation tool of any preceding clause, wherein the pair of catch arms and the pair of support arms comprises a catch surface for the nozzle.
20. The nozzle segment separation tool of any preceding clause, wherein the blocking pin comprise a flat face for the pushing bar.

## Claims

1. A nozzle segment separation tool (100) for use with a pair of adjacent nozzle segments (66) in a casing (64) of a turbine (40), comprising:
a pair of support plates (110);
a hydraulic cylinder (120) positioned within the pair of support plates (110);
a pushing bar (130) attached to the hydraulic cylinder (120);
a nozzle catch plate (140) positioned within the pair of support plates (110); and
a blocking pin (330) inserted through the casing (64);
wherein the blocking pin (330) forces the nozzle catch plate (140) to engage the a first nozzle segment (66) of the pair of adjacent nozzle segments (66) and blocks movement of the pushing bar (130) such that the nozzle catch plate (140) separates the pair of adjacent nozzle segments (66).

2. The nozzle segment separation tool (100) of claim 1, wherein the pair of support plates (110) comprises stainless steel.

3. The nozzle segment separation tool (100) of claim 1, wherein the pushing bar (130) comprises stainless steel.

4. The nozzle segment separation tool (100) of claim 1, wherein the hydraulic cylinder (120) and the pushing bar (130) are connected via a threaded adapter (170).

5. The nozzle segment separation tool (100) of claim 1, wherein the hydraulic cylinder (120) and the pushing bar (130) are connected via an L-shaped bar (180).

6. The nozzle segment separation tool (100) of claim 1, wherein the nozzle catch plate (140) comprises a pair of catch arms (230) and a pair of support arms (220).

7. The nozzle segment separation tool (100) of claim 6, wherein the pair of catch arms (230) and the pair of support arms (220) comprise a catch surface (240) for the first nozzle segment (66).

8. The nozzle segment separation tool (100) of claim 6, wherein the pair of catch arms (230) comprises an angled surface (250) for the pushing bar (130).

9. The nozzle segment separation tool (100) of claim 6, wherein each of the pair of support arms (220) comprises a slot (270) with a spring-loaded pin (260) therein.

10. The nozzle segment separation tool (100) of claim 1, wherein the nozzle catch plate (140) comprises a spring plunger (290) therein.

11. The nozzle segment separation tool (100) of claim 1, further comprising a shroud plate (300) positioned adjacent to the pair of support plates (110).

12. The nozzle segment separation tool (100) of claim 11, wherein the shroud plate (300) comprises a plurality of shroud pins (310).

13. The nozzle segment separation tool (100) of claim 1, wherein the blocking pin (330) comprise a flat face (340) for the pushing bar (130).

14. The nozzle segment separation tool (100) of claim 1, wherein the blocking pin (330) comprises a blocking nut (350).

15. A method of separating a pair of adjacent nozzles (56) in a casing (64) of a turbine (40), comprising:
sliding a nozzle segment separation tool (100) about the pair of adjacent nozzles (56);
inserting a blocking pin (330) through the casing (64);
forcing a nozzle catch plate (140) of the nozzle segment separation tool (100) into contact with one of the pair of adjacent nozzles (56) by the blocking pin (330);
engaging the blocking pin (330) with a pushing bar (130) of the nozzle segment separation tool (100); and
pulling the one of the pair of adjacent nozzles (56) by the nozzle catch plate (140).
